# EUROPEAN PATENT SPECIFICATION

(11) **EP 4 568 408 B1**
(45) Date of publication and mention of the grant of the patent: **28.10.2026**
(21) Application number: 23863550.2
(22) Date of filing: 08.09.2023
(51) Int. Cl.: H04W 76/10, H04W 40/12, H04W 40/24, H04L 41/0893, H04L 67/30, H04W 88/08, H04L 69/18, H04L 67/141, H04L 41/082, H04L 67/303, H04L 69/24

(54) **MESSAGE TRANSFER METHOD FOR SUPPORTING IN-NETWORK COMPUTING IN MOBILE COMMUNICATION NETWORK**
NACHRICHTENÜBERTRAGUNGSVERFAHREN ZUR UNTERSTÜTZUNG VON NETZWERKINTERNER DATENVERARBEITUNG IN EINEM MOBILKOMMUNIKATIONSNETZWERK
PROCÉDÉ DE TRANSFERT DE MESSAGE PERMETTANT DE PRENDRE EN CHARGE UNE INFORMATIQUE EN RÉSEAU DANS UN RÉSEAU DE COMMUNICATION MOBILE

(30) Priority: 08.09.2022 KR 20220114279
(43) Date of publication of application: 11.06.2025
(73) Proprietor: Samsung Electronics Co., Ltd., Suwon-si, Gyeonggi-do 16677 (KR)
(72) Inventor: HAN, Yoonseon, Suwon-si, Gyeonggi-do 16677 (KR); KIM, Dongmyung, Suwon-si, Gyeonggi-do 16677 (KR); KIM, Sunghwan, Suwon-si, Gyeonggi-do 16677 (KR); MOON, Younggyoun, Suwon-si, Gyeonggi-do 16677 (KR)
(74) Representative: Nederlandsch Octrooibureau
(86) International application number: PCT/KR2023/013491
(87) International publication number: WO 2024/054086

(56) References cited:
- EP-B1- 3 884 719
- WO-A1-2019/194633
- WO-A2-2020/185949
- KR-A- 20210 055 537
- US-A1- 2021 007 157
- US-A1- 2021 320 988
- US-A1- 2022 014 600
- RAVINDRAN FUTUREWEI P SUTHAR CISCO D TROSSEN C WANG INTERDIGITAL INC G WHITE CABLELABS R: "Enabling ICN in 3GPP's 5G NextGen Core Architecture; draft-ravi-icnrg-5gc-icn-04.txt", no. 4, 31 May 2019 (2019-05-31), pages 1 - 32, XP015133161, Retrieved from the Internet <URL:https://tools.ietf.org/html/draft-ravi-icnrg-5gc-icn-04> [retrieved on 20190531]
- KUNZE I., K. WEHRLE, D. TROSSEN, M.J. MONTPETIT, X. DE FOY, D. GRIFFIN, M. RIO , : "Use Cases for In-Network Computing draft-irtf-coinrg-use-cases-01 ", IETF, 25 October 2021 (2021-10-25), pages 1 - 91, XP093147406, Retrieved from the Internet <URL:https://datatracker.ietf.org/doc/draft-irtf-coinrg-use-cases/01/> [retrieved on 20240403]

## Description

### Technical Field

The disclosure relates to a wireless communication system, and more particularly, to a method for supporting in-network computing or on-path computing in future wireless mobile communication system to be lunched in the future, including a 5-th generation (5G) mobile communication system.

### Background Art

Looking back at a development process of each mobile communication generation, technologies have been mainly developed for human services, such as voice, multimedia, and data. After commercialization of 5-th generation (5G) communication systems, explosively increasing connected devices are expected to be connected to communication networks. Examples of network-connected objects may include vehicles, robots, drones, home appliances, displays, smart sensors installed in various infrastructures, construction machinery, and factory equipment. Mobile devices are expected to evolve into various form factors, such as augmented reality (AR) glasses, virtual reality (VR) headsets, and hologram devices. In the 6-th generation (6G) era, efforts are being made to develop improved 6G communication systems in order to provide a variety of services by connecting hundreds of billions of devices and objects. For this reason, the 6G communication systems are called Beyond 5G systems.

6G communication systems predicted to be realized around 2030 have a maximum transmission rate of tera (1000 gigabytes) ps (bit per second) and wireless latency of 100 microseconds (µsec), which is 50 times faster than 5G communication systems. The wireless latency is reduced to 1/10.

To achieve such high data transfer rates and ultra-low latency, implementing 6G communication systems in terahertz band (e.g., 95 GHz to 3 THz) is being considered. The importance of technology capable of guaranteeing a signal arrival distance, that is, coverage is expected to further increase in terahertz band due to more serious pathloss and atmospheric absorption phenomena compared to millimeter wave (mmWave) band introduced in 5G. As main technologies for ensuring coverage, radio frequency (RF) elements, antennas, new waveforms that are more excellent in terms of coverage than orthogonal frequency division multiplexing (OFDM), beamforming, and multi-antenna transmission technologies such as massive multiple input multiple output (MIMO), full dimensional MIMO (FD-MIMO), array antennas, and large scale antennas, need to be developed. In addition, to improve coverage of terahertz band signals, new technologies, such as metamaterial-based lenses and antennas, high-dimensional space multiplexing technology using orbital angular momentum (OAM), and reconfigurable intelligent surface (RIS), are being discussed.

Also, to increase frequency efficiency and improve system networks, full duplex (FD) technology that simultaneously utilizes the same frequency resource for uplink (terminal transmission) and downlink (base station transmission) at the same time, network technology that integrates and utilizes satellites and high-altitude platform stations (HAPS), network structure innovation technology that supports mobile base stations and enables network operation optimization and automation, dynamic spectrum sharing technology through collision avoidance based on spectrum use prediction, artificial intelligence (AI)-based communication technology that realizes system optimization by utilizing AI from the technology design stage and by internalizing end-to-end AI support functions, and next-generation distributed computing technology that realizes services at levels of complexity exceeding the limit of user equipment (UE) computing capability by utilizing ultra-high performance communication and computing resources (MEC, cloud, etc.) are being developed in the 6G communication system. In addition, through design of new protocols to be used in the 6G communication system, implementation of hardware-based security environments, development of mechanism for safe use of data, and development of technology for maintaining privacy, connectivity between devices is further strengthened, and attempts are continuing to further optimize networks, to promote softwareization of network entities, and to increase openness of mobile communication.

Due to research and development of this 6G communication system, the new level of the next-hyper-connected experience is expected to be possible through hyper-connectivity of the 6G communication system that includes not only connection between objects but also connection between persons and objects. In detail, it is expected that the 6G communication system will be able to provide services, such as truly immersive extended reality (XR), high-fidelity mobile hologram, and digital replica. Also, services, such as remote surgery, industrial automation, and emergency response, may be provided through the 6G communication system by improving security and reliability and may be applied in various fields such as industry, medicine, automobiles, and home appliances.

In-network computing has evolved from the existing role of a network that is responsible for delivering simple messages and refers to technology that performs tasks related to processing the request content on the network itself depending on the content of a message during delivery to a network device or the network. Through this, since requests are processed simultaneously with messages being delivered over the network, users are expected to acquire advantages, such as faster response time, higher service experience, and higher bandwidth utilization. Therefore, there is a need for research on network devices and software structures and interaction methods that may support this technologies in current or future networks.

Examples of in-network computing are US 2021/320988 A1 and EP 3 884 719 B1.

### Disclosure

### Technical Problem

Based on the above-described discussions, various embodiments of the disclosure aim to provide a method and device for supporting in-network computing or on-path computing in a mobile communication system.

The disclosure aims to provide a device for supporting in-network computing and a message exchange method between this device and components of the existing communication system, a procedure for a specific user to use in-network computing, and a method of identifying and controlling a network message (or packet) for in-network computing.

### Technical Solution

An embodiment of the present invention to solve the above-described problems discloses a method of a user equipment (UE) in a wireless communication system. The method may include receiving a UE Route Selection Policy (URSP) from a first network entity; determining whether to use in-network computing (INC) capability for specific traffic based on the URSP; transmitting, to a second network entity, a Packet Data Unit (PDU) session establishment request that includes information regarding whether to use the INC capability and traffic identification information; receiving a PDU session establishment result from the second network entity; and transmitting uplink data to a third network entity that supports the INC capability, selected by the second network entity, based on the PDU session establishment result.

Another embodiment of the present invention to solve the above-described problems discloses a method of a second network entity in a wireless communication system. The method may include receiving, from a UE, a PDU session establishment request that includes information regarding whether to use INC capability and traffic identification information; selecting a third network entity and performing a PDU session establishment procedure based on the PDU session establishment request; establishing an N4 session with the selected third network entity; and transmitting a PDU session establishment result for the PDU session establishment request to the UE.

Another embodiment of the present invention to solve the above-described problems discloses a method of a third network entity in a wireless communication system. The method may include registering, to a fifth network entity, a Network Function (NF) profile including an INC capability support status; establishing an N4 session with a second network entity that verifies whether INC capability is supported through the NF profile; and receiving uplink data from a UE.

### Effect

As described above, the present invention may improve a user's service experience through wireless mobile communication through effects, such as reducing latency that may occur in using a network, increasing network resource utilization, and utilizing a higher bandwidth, when using various services through a mobile communication network. In addition, by independently processing traffic occurring on the network, cost resulting from configuring/operating a network device may be reduced.

The effects that may be achieved from the present invention are not limited to the above-described effects and still other effects not mentioned herein will be clearly understood by one of ordinary skill in the art to which the present invention pertains from the following description.

### Brief Description of Drawings

FIG. 1 illustrates a wireless communication system capable of supporting in-network computing according to various embodiments of the disclosure.
FIG. 2 illustrates a procedure of supporting in-network computing capability using uplink in a wireless communication system according to various embodiments of the disclosure.
FIG. 3 illustrates a procedure of supporting in-network computing capability provided from an external data network (DN) using uplink in a wireless communication system according to various embodiments of the disclosure.
FIG. 4 illustrates a procedure of supporting in-network computing capability using downlink in a wireless communication system according to various embodiments of the disclosure.
FIG. 5 illustrates an AF request procedure for enabling in-network computing capability in a wireless communication system according to various embodiments of the disclosure.
FIG. 6 illustrates a procedure for enabling in-network computing capability in a general wireless communication system according to various embodiments of the disclosure.
FIG. 7 is a diagram illustrating a structure of a user equipment (UE) according to an embodiment of the present invention.
FIG. 8 is a diagram illustrating a structure of a network entity according to an embodiment of the present invention.

### Mode for Invention

Hereinafter, embodiments of the disclosure will be described in detail with reference to the accompanying drawings.

In describing the embodiments, description of technical content that is well known in the art to which the disclosure pertains and is not directly related to the disclosure is omitted. This is to more clearly convey the gist of the disclosure without obscuring it by omitting unnecessary description.

Likewise, some components are exaggerated, omitted, or schematically illustrated in the accompanying drawings. Also, the size of each component is not entirely representative of its actual size. Like reference numerals are assigned to like components or corresponding components in each drawing.

Advantages and features of the disclosure and methods for achieving the same will become clear by referring to the embodiments described in detail below with the accompanying drawings. However, the disclosure is not limited to the embodiments disclosed set forth herein and may be implemented in various different forms. The embodiments are simply provided to ensure that the disclosure is complete and to fully inform one of ordinary skill in the art to which the disclosure pertains of the scope of disclosure, and the disclosure will be defined by the claims. Like reference numerals refer to like components throughout the present specification.

Here, it will be understood that each block of processing flowchart illustrations and combinations of the flowchart illustrations may be performed by computer program instructions. These computer program instructions may be provided to a processor of a general-purpose computer, a special purpose computer, or other programmable data processing apparatus, such that the instructions, executed via the processor of the computer or other programmable data processing apparatus, create a method of performing the functions described in the flowchart block(s). Since these computer program instructions may also be stored in a computer usable or computer-readable memory that may direct a computer or other programmable data processing apparatus to implement a function in a particular manner, the instructions stored in the computer usable or computer-readable memory may produce an article of manufacture including an instruction method for implementing the function specified in the flowchart block(s). The computer program instructions may also be loaded onto a computer or other programmable data processing apparatus to cause a series of operational steps to be performed on the computer or other programmable apparatus to produce a computer implemented process such that the instructions executed on the computer or other programmable apparatus provide steps for implementing the functions specified in the flowchart block(s).

Also, each block may represent a module, a segment, or a portion of code, which includes one or more executable instructions for implementing the specified logical function(s). It should also be noted that in some alternative implementations, the functions noted in the blocks may occur out of order. For example, two blocks shown in succession may in fact be executed simultaneously or the blocks may sometimes be executed in the reverse order, depending on the functionality involved.

Here, the term "unit" used herein refers to a software element or a hardware element, such as a field programmable gate array (FPGA) or an application specific integrated circuit (ASIC), which may perform a predetermined function. However, the term "unit" does not always have a meaning limited to software or hardware. "Unit" may be configured either to be stored in an addressable storage medium or to execute one or more processors. Therefore, "unit" includes, for example, elements such as software elements, object-oriented software elements, class elements, and task elements, processes, functions, properties, procedures, sub-routines, segments of a program code, drivers, firmware, micro-codes, circuits, data, database, data structures, tables, arrays, and parameters. The elements and functions provided by the "unit" may be combined into a smaller number of elements and "units", or further divided into additional elements and "units". In addition, the elements and "units" may be implemented to reproduce one or more CPUs within a device or a security multimedia card. Also, the term "unit" in the embodiments may include one or more processors.

In describing embodiments of the disclosure in detail, a new radio access network (RAN) (NR) on 5-th generation (5G) mobile communication standards specified by 3-rd Generation Partnership Project (3GPP), which is a mobile communication standard standardization organization, and a packet core (5G system, 5G core network, or next generation (NG) core), which is a core network, are main targets. However, the main gist of the disclosure may be applied to other communication systems having similar technical background with slight modifications, without significantly departing from the scope of the disclosure, which may be possible at the discretion of one of ordinary skill in the art of the disclosure. In addition, it may be applied to post-5G mobile communication systems or 6-th generation (6G) mobile communication systems that will appear in the next 10 years.

For convenience of description below, some of terms and names defined in 3rd Generation Partnership Project (3GPP) Long Term Evolution standards (standards of 5G, NR, LTE, or system similar thereto) may be used. However, the disclosure is not limited to the terms and the names, and may be equally applied to system that comply with other standards.

Also, as used in the following description, terms for identifying an access node, terms that refer to network entities, terms that refer to messages, terms that refer to interface between network entities, and terms that refer to a variety of identification information are provided as examples for convenience of description. Therefore, without being limited to the terms used in the disclosure, other terms that refer to objects having the equivalent technical meaning may be used.

The disclosure relates to a method for supporting the operation of an unmanned aerial vehicle in a mobile communication system that complies with 3GPP standards, and achieves the goal of the invention through interaction with devices or objects described below.

A radio access network ((R)AN) refers to technology used for wireless communication between a base station and a UE, such as 5G-NR, E-UTRAN, UTRAN, and GERAN, and the UE receives communication services by connecting to eNB or gNB, which is the base station that supports wireless mobile communication technology for wireless communication. The base station may interact with a core network to transmit control signals or data transmitted from UEs to a device present in the core network and receive configuration, to transmit and receive data, or to perform procedures for management. In addition, the UE may be connected to a data network by utilizing technology that uses a sidelink such as proximity service (ProSe) that performs direct communication between UEs without being connected to the base station or non-3GPP wireless access technology, such as WiFi and Bluetooth.

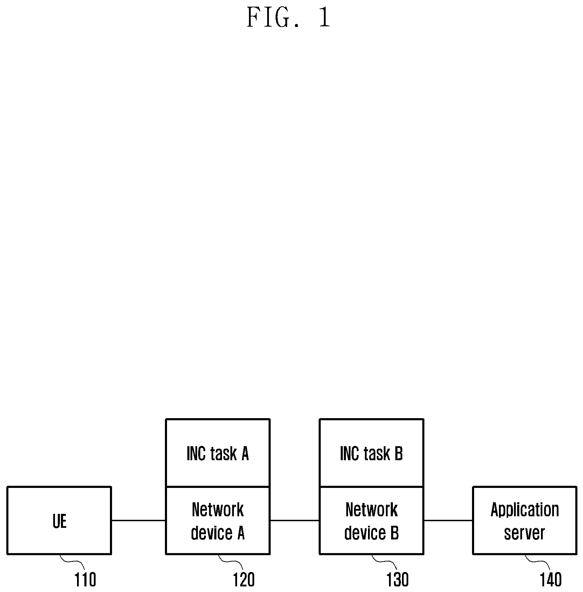

The description of entities that constitute the core network appearing in the disclosure may be made as follows. A unit that performs the respective functions provided from a 5G network system may be defined as a Network Function (NF). The structure of the 5G mobile communication network is illustrated in FIG. 1. Representative NFs include an Access and Mobility Management Function (AMF) that manages network access and mobility of a user equipment (UE), a Session Management Function (SMF) that performs session-related functions, a User Plane Function (UPF) that is responsible for delivery of user data, an Application Function (AF) that communicates with 5GC to provide an application, a Network Exposure Function (NEF) that supports between the 5GC and the AF, Unified Data Management (UDM) and Unified Data Repository (UDR) for data storage and management, a Policy and Control Function (PCF) that manages policies, and a Data Network (DN), such as the Internet, through which user data is delivered. In addition to the NF, there may be Operation, Administration, and Management (OAM) that is a system for managing the UE and the 5G mobile communication network.

In addition, although it is not a component of the 5G network system, an edge computing infrastructure, an infrastructure manager, and a service may be included as external entities to provide services. The edge computing infrastructure manager is an entity that manages resources present in the edge computing infrastructure and refers to an entity that is present as an independent entity or present on a specific service or platform and performs the same function. In the disclosure, the edge computing infrastructure manager may assume a situation capable of exchanging information with the 5G core network through the NEF, and may be the same as the AF or may be connected to the AF to exchange information with the core network.

Information exchange and control signal exchange between the entities described above use procedures, interfaces, and protocols defined in 3GPP standard specification documents. However, all the terms included in the disclosure are not limited to the 3GPP terms and names, and may be equally applied to systems and devices that comply with other standards. In describing embodiments of the disclosure in detail, communication standards established by 3GPP may be the main target, but the main gist of the disclosure may be applied to other communication systems having similar technical background with slight modifications, without significantly departing from the scope of the disclosure, which may be possible at the discretion of one of ordinary skill in the art of the disclosure.

In addition to the components of the 5G mobile communication network described above, there may be devices to support in-network computing (or on-path computing). In-network computing refers to technology that offloads a portion of application to a network device. Through this, by helping network devices that simply handle tasks, such as forwarding of network traffic, to process applications, advantages such as a reduction in service latency, an increase in transmission volume, and a reduction in power consumption may be achieved. Representative types of applications that may be utilized through in-network computing may include support of some functions of a cache, a load balancer, a NAT server, a DNS server, and AI/ML-related servers.

The general structure of in-network computing is illustrated in FIG. 1. In the case of a general UE or application that does not use in-network computing, traffic originating from the UE is delivered to an application server through a network device and a server processes a delivered request and responds to the UE with the corresponding result. In this process, network devices simply perform the role of delivering messages generated between the UE and the server. In FIG. 1, if traffic originating from a specific UE is an application that uses in-network computing, a network device A 120 may respond by processing a response requested by a UE 110 on behalf of a server. Additionally, the network device 120, 130 does not completely process the request from the UE 110 and a server 140 or a network device present behind the server 140 may modify the request from the UE 110 into a form that is easy to process or may deliver the processing result. Depending on applications, a plurality of network devices 120 and 130 may participate and may perform processing for a single application.

To increase the efficiency for such in-network computing, a process of configuring a route such that application traffic originating from a UE passes through a specific network device is essentially required in the process of delivering traffic originating from the UE to a server. Therefore, there is a need for a method that selects traffic originating from a specific UE or traffic of a specific application originating from the specific UE and configures a route ultimately connected to the server through a network device that supports in-network computing capability.

### [First embodiment] - A Packet Data Unit (PDU) session connection method and UPF selection method for supporting uplink in-network computing

In a 5G mobile communication system, devices that deliver user data to a UPF may be largely classified into a UE, a RAN, and a UPF, and data is delivered to a DN that is a network present outside through the UPF. The DN refers to a network that is present outside the mobile communication system and accessible to application servers. In the disclosure, disclosed is a method of supporting in-network computing by expanding a device that delivers user data in a current 5G system or a future mobile communication network.

In the current 5G mobile communication system, the RAN and the UPF are present as representative internal entities for the purpose of controlling the quality and performance of network services among delivery devices of the UE. Except for some special cases, traffic of most services is delivered through the UPF and, here, a specific quality of service (QoS)-related policy is applied. Basically, the basic application unit of this policy or rule uses QoS flow as a basic unit. The UPF may detect the QoS flow through a Packet Detection Rule (PDR).

In the 5G mobile communication system, in order for a specific UE to communicate with the DN present outside, a PDU session needs to be established and network traffic may be delivered through the established PDU session. A plurality of QoS flows may be present within a single PDU session. The disclosure includes a method that allows the UE to explicitly transmit, to a communication network, a signal of using in-network computing in the process of establishing the PDU session for data transmission and to select the UPF of providing related functions.

In the embodiment, in addition to the existing functions such as delivery of existing data traffic, QoS application, and usage reporting, the UPF may have functions that enable application processing. The UPF capable of processing such data or information may add, delete, and modify a header of a packet, and may also add, modify, and delete data (payload) present inside the packet header. Here, to support performing of data processing, only processing of a single packet is not considered and functions of storing a previously transmitted packet, waiting for a packet to be delivered in the future, or internally using processed data of collected packets may be utilized. Representative examples of such data processing may include an AI/ML inference function, a Map/Reduce function of in-packet data, and an aggregation function of packet data. An operation method of an application for processing in-packet data may be performed as if arbitrarily installed by a network operator or may be performed as in other embodiments of the disclosure. Functions of the newly expanded UPF may be added to an NF profile of the UPF and used in the process in which the SMF selects the UPF. Here, information stored in the NF profile may be expressed in the form of a traffic descriptor or an app ID that is an identifier capable of identifying traffic of a specific application. Therefore, the NF profile may be stored in the form of [Traffic descriptor, in-network computing support indicator]. In the disclosure, information on the functions of the newly expanded UPF may be expressed as a portion of the NF profile, but may also be expressed as a type of UPF capability as in-network computing spreads.

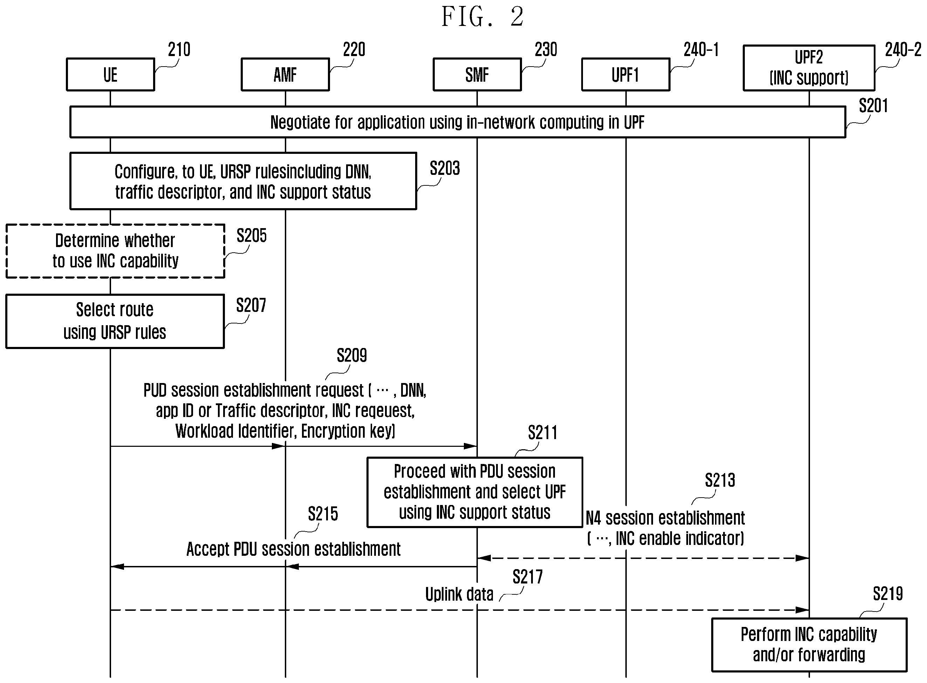

In the disclosure, the method of supporting in-network computing described above is further described with reference to FIG. 2.

Operation S201: As preprocessing for implementing the disclosure, in-network computing capability that may be processed in a UPF 240-2 is installed and a type or traffic of application using the same may be negotiated between a network service provider and a user. Content related to this negotiation and configuration for processing in-network computing of the UPF 240-2 may be generated at any point in time before a subsequent operation. Here, a policy related to the application related to this negotiation may be stored in PCF, UDR, or UDM, and may be read when a specific UE 210 or the user uses a network.

Operation S203: The UE 210 may make a service request for registration to use the network or for packet delivery. In this process, UE-related policies may be modified. This procedure is referred to as UE configuration update in 3GPP, and may be performed with a registration procedure of the UE 210, and may be performed in response to a request from the network at an arbitrary point in time. In this process, network-related policies that need to be configured to the UE 210 may be delivered. A representative policy delivered in this process is a UE Route Selection Policy (URSP). The URSP is used to select a specific slice, a Session and Service Continuity (SSC) mode, and a Data Network Name (DNN) when the UE 210 uses the network to transmit specific traffic. The selected information may be delivered to the network as factors in a PDU session establishment procedure. The disclosure expands URSP rules and additionally includes a method of providing information that in-network computing capability is provided to the application negotiated in a previous operation. Tables 1 and 2 are part of TS23.503 specified by the 3GPP and include a method for URSP rules. In Table 2, in addition to some rules of URSP defined in the existing 3GPP, information or an indicator (in-network computing support indicator) regarding whether in-network computing is available with respect to specific traffic or application may be included. When the in-network computing indicator is configured, the UE 210 may determine information that the specific traffic (or application) may support in-network computing by way of the network in operation S205 and may utilize this to determine whether to use this function.

Operation S207: When traffic that needs to be delivered through the network originates from the UE 210, the UE 210 may verify whether the in-network computing capability is supported along with the existing information, such as DNN and Single-Network Slice Selection Assistance Information (S-NSSAI) to which the current traffic needs to be delivered, by utilizing the URSP rules delivered in the previous operation, and may determine whether to use the in-network computing capability. Here, when a PDU session to which the UE 210 has delivered traffic is absent or such that newly originated traffic is supported with in-network computing, the UE 210 may determine to request establishment of a new PDU session. Additionally, the UE 210 may specify workload that performs in-network computing required by the application that is in use in the UE 210. This may be acquired through an internal message delivery method between the UE 210 and the application being used by the UE 210. In-network computing workload may refer to a piece of a processing operation on the network or computing required by the application that runs on the UE 210. In the disclosure, the in-network computing workload may refer to an operation that is processed on a delivered packet when the application uses in-network computing.

Operation S209: The UE 210 may perform a PDU session establishment procedure to transmit the traffic. This process may be the same as the existing PDU session establishment procedure defined in the 3GPP. In addition, if the specific application is the target of in-network computing provided from the UPF 240-2 and is determined to be used in operation S207, the UE 210 may include information related to in-network computing in the PDU session establishment request. This information may be expressed in the form of an application ID or a traffic descriptor for identifying the application and an in-network computing use status request factor [app ID or traffic descriptor, in-network computing request]. In operation S209, the UE 210 may deliver additional in-network computing-related factors to an SMF 230. The in-network computing-related factors may include the in-network computing workload identifier verified in operation S207, application traffic form information, an encryption key, and whether L4 manipulation/termination is possible. The workload identifier is an identifier capable of identifying a processing logic for data of UE-required application and refers to a processing logic processed by in-network computing. Here, a plurality of in-network computing workload identifiers may be included. The application traffic form information refers to a method for expressing a relationship when data to be processed through in-network computing is converted to a packet. A case in which data matches a single packet without fragmentation, a case in which data is divided into a plurality of packets due to occurrence of data fragmentation, and a case of consecutive streams may be expressed as the application traffic form information. The encryption key refers to information required to interpret data of application when the data is encrypted, and allows a device that processes in-network computing to acquire unencrypted data from a packet using the same. The L4 manipulation/termination status may indicate whether it is possible to modify data in the middle, to return a response, or to terminate L4 session depending on the processing result of in-network computing for L4 session connection between end nodes.

Additionally, the application used in the UE 210 may directly deliver, to the SMF 230, a portion of a program capable of converting, to workload, and directly executing a processing logic of the application used in in-network computing. Methods of expressing this workload may include a method of expressing the workload in a binary code, a method of expressing the same as a container including the workload, and a method of expressing the same as a portion of a code that may be compiled.

Operation S211: The SMF 230 that receives the PDU session establishment request may proceed with the PDU session establishment procedure based on information requested by the UE 210. Here, the processing and delivery procedure of the request may be configured identically to the procedure defined in 3GPP specifications. If an in-network computing support request is included in the PDU session establishment procedure in operation S209, the SMF 230 may additionally proceed with a process of selecting the UPF 240-2. In the process of selecting the UPF 240-1, 240-2, the SMF 230 may determine whether the in-network computing capability for the application requested as described above is supported through an NF profile of the UPF 240-1, 240-2 stored in an NRF. Through this, the SMF 230 may select the appropriate UPF 240-2 capable of handling the PDU session requested to be established.

Operation S213: The SMF 230 may establish an N4 session with the UPF 240-2 according to the 3GPP specifications. In this process, if the in-network computing capability of the UPF 240-2 is not enabled, the SMF 230 may request the UPF 240-2 to enable the in-network computing capability for the specific application. Additionally, when the UE 210 delivers a workload identifier related to in-network computing to the SMF 230, the SMF 230 may install and execute workload corresponding to the identifier. If resources of a single UPF 240-2 are insufficient or if an additional UPF is required in consideration of QoS, the SMF 230 may determine insertion of I-UPF and may generate a route that connects a plurality of UPFs such that the entire processing functions requested in in-network computing may be performed. Here, the SMF 230 may configure determining whether to buffer the specific PDU session based on a traffic type delivered in operation S209 and descripting an encrypted packet. When the executable workload is directly delivered from the UE 230, the SMF 230 may verify integrity of the delivered workload and then may install/execute the same in the UPF 240-2.

Operation S215: The SMF 230 may respond to the UE 210 that has transmitted the PDU session establishment request with the result of performing the procedure.

Operation S217: The UE 210 may transmit uplink data through the established PDU session.

Operation S219: In the case of traffic requested to receive in-network computing support in the above-described operations among the data transmitted in operation S217, the UPF 240-2 may perform predefined in-network computing capability for the corresponding traffic.

**Table 1: UE Route Selection Policy Rule**

| **Information name** | **Description** | **Category** | **PCF permitted to modify in a UE context** | **Scope** |
|---|---|---|---|---|
| Rule Precedence | Determines the order the URSP rule is enforced in the UE. | Mandatory (NOTE 1) | Yes | UE context |
| **Traffic descriptor** | *This part defines the Traffic descriptor components for the URSP rule.* | Mandatory (NOTE 3) | | |
| Application descriptors | It consists of OSId and OSAppId(s). (NOTE 2) | Optional | Yes | UE context |
| IP descriptors (NOTE 5) | Destination IP 3 tuple(s) (IP address or IPv6 network prefix, port number, protocol ID of the protocol above IP). | Optional | Yes | UE context |
| Domain descriptors | FQDN(s) or a regular expression which are used as a domain name matching criteria (NOTE 6). | Optional | Yes | UE context |
| Non-IP descriptors (NOTE 5) | Descriptor(s) for destination information of non-IP traffic | Optional | Yes | UE context |
| DNN | This is matched against the DNN information provided by the application | Optional | Yes | UE context |
| Connection Capabilities | This is matched against the information provided by a UE application when it requests a network connection with certain capabilities. (NOTE 4) | Optional | Yes | UE context |
| **List of Route Selection Descriptors** | A list of Route Selection Descriptors. The components of a Route Selection Descriptor are described in table 6.6.2.1-3. | Mandatory | | |
| NOTE 1: Rules in a URSP shall have different precedence values. | | | | |
| NOTE 2: The information is used to identify the Application(s) that is(are) running on the UE's OS. The OSID does not include an OS version number. The OSAppId does not include a version number for the application. | | | | |
| NOTE 3: At least one of the Traffic descriptor components shall be present. | | | | |
| NOTE 4: The format and some values of Connection Capabilities, e.g. "ims", "mms", "internet", etc., are defined in TS 24.526 [19]. More than one connection capabilities value can be provided. | | | | |
| NOTE 5: A URSP rule cannot contain the combination of the Traffic descriptor components IP descriptors and Non-IP descriptors. | | | | |
| NOTE 6: The match of this traffic descriptor does not require successful DNS resolution of the FQDN provided by the UE Application. | | | | |

**Table 2: Route Selection Descriptor**

| **Information name** | **Description** | **Category** | **PCF permitted to modify in URSP** | **Scope** |
|---|---|---|---|---|
| Route Selection Descriptor Precedence | Determines the order in which the Route Selection Descriptors are to be applied. | Mandatory (NOTE 1) | Yes | UE context |
| **Route selection components** | This *part defines the route selection components* | Mandatory (NOTE 2) | | |
| SSC Mode Selection | One single value of SSC mode. (NOTE 5) | Optional | Yes | UE context |
| Network Slice Selection | Either a single value or a list of values of S-NSSAI(s). | Optional (NOTE 3) | Yes | UE context |
| DNN Selection | Either a single value or a list of values of DNN(s). | Optional | Yes | UE context |
| PDU Session Type Selection | One single value of PDU Session Type | Optional (NOTE 8) | Yes | UE context |
| Non-Seamless Offload indication | Indicates if the traffic of the matching application is to be offloaded to non-3GPP access outside of a PDU Session. | Optional (NOTE 4) | Yes | UE context |
| ProSe Layer-3 UE-to-Network Relay Offload indication | Indicates if the traffic of the matching application is to be sent via a ProSe Layer-3 UE-to-Network Relay outside of a PDU session. | Optional (NOTE 4) | Yes | UE context |
| Access Type preference | Indicates the preferred Access Type (3GPP or non-3GPP or Multi-Access) when the UE establishes a PDU Session for the matching application. | Optional | Yes | UE context |
| PDU Session Pair ID | An indication shared by redundant PDU Sessions as described in clause 5.33.2.1 of TS 23.501 [2]. | Optional | Yes | UE context |
| RSN | The RSN as described in clause 5.33.2.1 of TS 23.501 [2]. | Optional | Yes | UE context |
| In-Network Computing Support Indicator | Indicates if the traffic of the matching application could be supported by In-network computing | Optional | Yes | UE context |
| **Route Selection Validation Criteria** (NOTE 6) | *This part defines the Route Validation Criteria components* | Optional | | |
| Time Window | The time window when the matching traffic is allowed. The RSD is not considered to be valid if the current time is not in the time window. | Optional | Yes | UE context |
| Location Criteria | The UE location where the matching traffic is allowed. The RSD rule is not considered to be valid if the UE location does not match the location criteria. | Optional | Yes | UE context |
| NOTE 1: Every Route Selection Descriptor in the list shall have a different precedence value. | | | | |
| NOTE 2: At least one of the route selection components shall be present. | | | | |
| NOTE 3: When the Subscription Information contains only one S-NSSAI in UDR, the PCF needs not provision the UE with S-NSSAI in the Network Slice Selection information. The "match all" URSP rule has one S-NSSAI at most. | | | | |
| NOTE 4: If this indication is present in a Route Selection Descriptor, no other components shall be included in the Route Selection Descriptor. | | | | |
| NOTE 5: The SSC Mode 3 shall only be used when the PDU Session Type is IP. | | | | |
| NOTE 6: The Route Selection Descriptor is not considered valid unless all the provided Validation Criteria are met. | | | | |
| NOTE 7: In this Release of specification, inclusion of the Validation Criteria in Roaming scenarios is not considered. | | | | |
| NOTE 8: When the PDU Session Type is "Ethernet" or "Unstructured", this component shall be present. | | | | |

### [Second embodiment] - A PDU session establishment and data network connection method for supporting uplink in-network computing

In a 5G mobile communication system, devices that deliver user data to a UPF may be largely classified into a UE, a RAN, and a UPF, and data is delivered to a DN that is a network present outside through the UPF. The DN refers to a network that is present outside the mobile communication system and accessible to application servers. In the disclosure, disclosed is a method of supporting in-network computing by expanding a device that delivers user data in a current 5G system or a future mobile communication network.

In the 5G mobile communication system, in order for a specific UE to communicate with the DN present outside, a PDU session needs to be established and network traffic may be delivered through the established PDU session. A plurality of QoS flows may be present within a single PDU session. The disclosure includes a method that allows the UE to explicitly transmit, to a communication network, a signal of using in-network computing in the process of establishing the PDU session for data transmission and to select the UPF of providing related functions.

The embodiment includes a method that, when a network device present in a specific DN supports in-network computing capability, allows traffic originating from a UE to utilize related functions through this device. The network device present in the DN may be a network device, such as a switch or a router. Here, the network may perform the role of delivering or forwarding a packet as before and may also perform the function of processing information inside the packet. Here, to support performing of data processing, only processing of a single packet is not considered and functions of storing a previously transmitted packet, waiting for a packet to be delivered in the future, or internally using processed data of collected packets may be utilized. Representative examples of such data processing may include an AI/ML inference function, a Map/Reduce function of in-packet data, and an aggregation function of packet data. An operation method of an application for processing in-packet data may be performed as if arbitrarily installed by a network operator or may be performed as in other embodiments of the disclosure. To express the DN that supports the functions, an NF profile of the UPF connected to the DN may be utilized in the disclosure. Through this, an SMF may configure a route such that a data packet delivered through a PDU session generated from a specific UE may be correctly delivered to a device of the corresponding DN. Here, the NF profile of the UPF that supports in-network computing capability may include a Data Network Name (DNN), a Data Network Access ID (DNAI), a traffic descriptor, or an app ID to indicate whether connection with a specific DN is supported. Therefore, the NF profile may be stored in a combination of [DNN, DNAI, traffic descriptor, in-network computing support indicator]. In the disclosure, information indicating whether the in-network computing capability is supported is expressed as a portion of the NF profile, but as in-network computing is spread, it may also be expressed as a type of UPF capability.

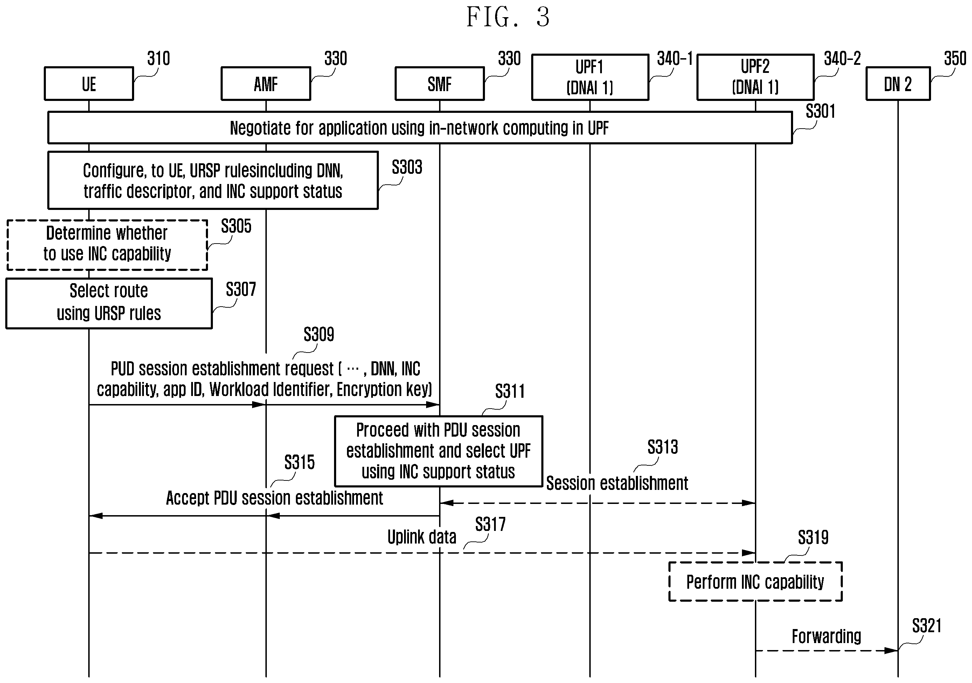

In the disclosure, the method of supporting in-network computing described above is further described with reference to FIG. 3.

Operation S301: As preprocessing for implementing the disclosure, information on in-network computing capability that may be processed in a DN 350 connected through a UPF 340-1, 340-2 may be provided to the UPF 340-1, 340-2, and a type or traffic of application using the same may be negotiated between a network service provider and a user. Content related to this negotiation and configuration for processing in-network computing between the UPF 340-1, 340-2 and the DN 350 may be generated at any point in time before a subsequent operation. Here, a policy related to the application related to this negotiation may be stored in PCF, UDR, or UDM, and may be read when a specific UE or the user uses the network.

Operation S303: A UE 310 may make a service request for registration to use the network or for packet delivery. In this process, UE-related policies may be modified. This procedure is referred to as UE configuration update in 3GPP, and may be performed with a UE registration procedure, and may be performed in response to a request from the network at an arbitrary point in time. In this process, network-related policies that need to be configured to the UE 310 may be delivered. A representative policy delivered in this process is a UE Route Selection Policy (URSP). The URSP is used to select a specific slice, a Session and Service Continuity (SSC) mode, and a Data Network Name (DNN) when the UE uses the network to transmit specific traffic. The selected information may be delivered to the network as factors in a PDU session establishment procedure. The disclosure expands URSP rules and additionally includes a method of providing information that in-network computing capability is provided to the application negotiated in a previous operation. Tables 1 and 2 are part of TS23.503 specified by the 3GPP and include a method for URSP rules. In Table 2, in addition to some rules of URSP defined in the existing 3GPP, information or an indicator (in-network computing support indicator) regarding whether in-network computing is available with respect to specific traffic or application may be included. When the in-network computing indicator is configured, the UE 310 may determine information that the specific traffic (or application) may support in-network computing by way of the network in operation S305 and may utilize this to determine whether to use this function.

Operation S307: When traffic that needs to be delivered through the network originates from the UE 310, the UE 310 may verify whether the in-network computing capability is supported along with the existing information, such as DNN and S-NSSAI to which the current traffic needs to be delivered, by utilizing the URSP rules delivered in the previous operation, and may determine whether to use the in-network computing capability. Here, when a PDU session to which the UE 310 has delivered the traffic is absent or such that newly originated traffic is supported with in-network computing, the UE 310 may determine to request establishment of a new PDU session. Additionally, the UE 310 may specify workload that performs in-network computing required by the application that is in use in the UE 310. This may be acquired through an internal message delivery method between the UE 310 and the application being used by the UE 310. In-network computing workload may refer to a piece of a processing operation on the network or computing required by the application that runs on the UE 310. In the disclosure, the in-network computing workload may refer to an operation that is processed on a delivered packet when the application uses in-network computing.

Operation S309: The UE 310 may perform a PDU session establishment procedure to transmit the traffic. This process may be the same as the existing PDU session establishment procedure defined in the 3GPP. In addition, if the specific application is the target of in-network computing and is determined to be used in operation S307, the UE 310 may include information related to in-network computing in the PDU session establishment request. This information may be expressed in the form of an application ID or a traffic descriptor for identifying the application and an in-network computing use status request factor [app ID or traffic descriptor, in-network computing request]. Therefore, for PDU session establishment, the UE 310 may additionally deliver information on the application to be used for in-network computing along with DNN and S-NSSAI.

In this operation S309, the UE 310 may deliver additional in-network computing-related factors to an SMF 330. The in-network computing-related factors may include the in-network computing workload identifier verified in operation S307, application traffic form information, an encryption key, and whether L4 manipulation/termination is possible. The workload identifier is an identifier capable of identifying a processing logic for data of UE-required application and refers to a processing logic processed by in-network computing. Here, a plurality of in-network computing workload identifiers may be included. The application traffic form information refers to a method for expressing a relationship when data to be processed through in-network computing is converted to a packet. A case in which data matches a single packet without fragmentation, a case in which data is divided into a plurality of packets due to occurrence of data fragmentation, and a case of consecutive streams may be expressed as the application traffic form information. The encryption key refers to information required to interpret data of application when the data is encrypted, and allows a device that processes in-network computing to acquire unencrypted data from a packet using the same. The L4 manipulation/termination status may indicate whether it is possible to modify data in the middle, to return a response, or to terminate L4 session depending on the processing result of in-network computing for L4 session connection between end nodes.

Additionally, the application used in the UE 310 may directly deliver, to the SMF 330, a portion of a program capable of converting, to workload, and directly executing a processing logic of the application used in in-network computing. Methods of expressing this workload may include a method of expressing the workload in a binary code, a method of expressing the same as a container including the workload, and a method of expressing the same as a portion of a code that may be compiled.

Operation S311: The SMF 330 that receives the PDU session establishment request may proceed with the PDU session establishment procedure based on information requested by the UE 310. Here, the processing and delivery procedure of the request may be configured identically to the procedure defined in 3GPP specifications. If an in-network computing support request is included in the PDU session establishment procedure in operation S309, the SMF 330 may additionally proceed with a process of selecting the UPF 340-2. In the process of selecting the UPF 340-1, 340-2, the SMF 330 may need to select the DN 350 or DNAI that supports the in-network computing capability for the requested application, as described above. To this end, the SMF 330 may acquire related information through an NF profile of the UPF 340-1, 340-2 stored in an NRF, and may determine the DN 350 or DNAI that supports the in-network computing for the application requested by the UE 310. Through this, the SMF 330 may select the UPF 340-2 connected to the appropriate DN 350 capable of handling the PDU session requested to be established.

Operation S313: The SMF 330 may establish an N4 session with the UPF 340-2 according to the 3GPP specifications. In this process, if a device that supports in-network computing present in the DN 350 requires structure or header information of a special packet, the UPF 340-2 may require a function for processing the same. A representative example of this function may be a function of adding a specific packet header. In this process, if the in-network computing capability of the UPF 340-2 is not enabled, the SMF 330 may request the UPF 340-2 to enable the in-network computing capability for the specific application. Additionally, when the UE 310 delivers a workload identifier related to in-network computing to the SMF 330, the SMF 330 may install and execute workload corresponding to the identifier. If resources of a single UPF 340-2 are insufficient or if an additional UPF is required in consideration of QoS, the SMF 330 may determine insertion of I-UPF and may generate a route that connects a plurality of UPFs such that the entire processing functions requested in in-network computing may be performed. Here, the SMF 330 may configure determining whether to buffer the specific PDU session based on a traffic type delivered in operation S309 and decrypting an encrypted packet. When the executable workload is directly delivered from the UE 330, the SMF 330 may verify integrity of the delivered workload and then may install/execute the same in the UPF 340-2.

Operation S315: The SMF 330 may respond to the UE 310 that has transmitted the PDU session establishment request with the result of performing the procedure.

Operation S317: The UE 310 may transmit uplink data through the established PDU session.

Operation S319: In the case of traffic requested to receive in-network computing support in the above-described operation among the data transmitted in operation S317, the UPF 340-2 may perform predefined in-network computing capability for the corresponding traffic. Also, when the corresponding application is a packet for in-network computing, the UPF 340-2 that receives an upper link delivered from the UE 310 may perform the addition function enabled in operation S313.

S321 operation: The UPF 340-2 may deliver the packet transmitted from the UE 310 to the DN 350.

### [Third embodiment] - A PDU session connection method and a UPF selection method for supporting downlink in-network computing

In a 5G mobile communication system, devices that deliver user data to a UPF may be largely classified into a UE, a RAN, and a UPF, and data is delivered to a DN that is a network present outside through the UPF. The DN refers to a network that is present outside the mobile communication system and accessible to application servers. In the disclosure, disclosed is a method of supporting in-network computing by expanding a device that delivers user data in a current 5G system or a future mobile communication network.

In the current 5G mobile communication system, the RAN and the UPF are present as representative internal entities for the purpose of controlling quality and performance of network services among delivery devices of the UE. The UPF serves to detect a specific service and apply a QoS-related rule. Except for special cases, traffic of most services is delivered through the UPE. Here, a specific QoS-related policy is applied. Basically, the basic application unit of this policy or rule uses QoS flow as a basic unit. The UPF may detect the QoS flow through a Packet Detection Rule (PDR).

In the 5G mobile communication system, in order for a specific UE to communicate with the DN present outside, a PDU session needs to be established and network traffic may be delivered through the established PDU session. A plurality of QoS flows may be present within a single PDU session. The disclosure includes a method that allows the UE to explicitly transmit, to a communication network, a signal of using in-network computing in the process of establishing the PDU session for data transmission and to select the UPF of providing related functions.

In this embodiment, in addition to the existing functions such as delivery of data traffic, QoS application, and usage reporting, the UPF may have functions that enable application processing. The UPE capable of processing such data or information may add, delete, and modify a header of a packet, and may also add, modify, and delete data (payload) present inside the packet header. Here, to support performing of data processing, only processing of a single packet is not considered and functions of storing a previously transmitted packet, waiting for a packet to be delivered in the future, or internally using processed data of collected packets may be utilized. Representative examples of such data processing may include an AI/ML inference function, a Map/Reduce function of in-packet data, and an aggregation function of packet data. An operation method of an application for processing in-packet data may be performed as if arbitrarily installed by a network operator or may be performed as in other embodiments of the disclosure. Functions of the newly expanded UPF may be added to an NF profile of the UPF and used in the process in which the SMF selects the UPF. Here, information stored in the NF profile may be expressed in the form of a traffic descriptor or an app ID that is an identifier capable of identifying traffic of a specific application. Therefore, the NF profile may be stored in the form of [Traffic descriptor, in-network computing support indicator]. In the disclosure, information on the functions of the newly expanded UPF may be expressed as a portion of the NF profile, but may also be expressed as a type of UPF capability as in-network computing spreads.

In order for the UE to perform a service request to the outside, a process of establishing a PDU session and delivering data is performed using uplink. Here, establishment of the uplink and establishment of the related PDU session are performed upon request from the UE. However, when traffic generated in downlink is delivered to the UE, the UE needs to establish the PDU session under control of the network. Therefore, at a point in time at which a packet is generated, the UE may not request in-network computing for a packet that comes in the downlink. When a packet generated in the DN is delivered to the UE through the downlink, procedures for determining, by the network, whether a downlink packet is subject to in-network computing and supporting the same need to be initiated.

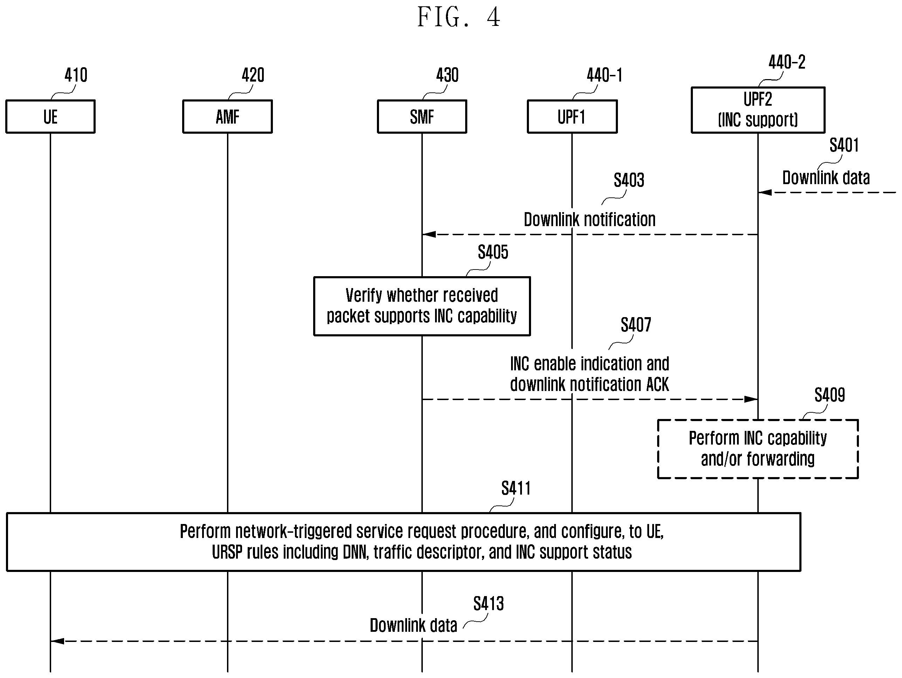

In the disclosure, the method of supporting in-network computing in the downlink described above is further described with reference to FIG. 4.

Pre-negotiation stage: As preprocessing for implementing the disclosure, in-network computing capability that may be processed in a UPF 440-2 is installed and a type or traffic of application using the same may be negotiated between a network service provider and a user. Content related to this negotiation and configuration for processing in-network computing of the UPF 440-2 may be generated at any point in time before a subsequent operation. Here, a policy related to the application related to this negotiation may be stored in PCF, UDR, or UDM, and may be read when a specific UE 410 or the user uses a network.

Operation S401: Traffic originating from a DN may be delivered to the anchor UPF 440-2 connected to the DN, to be delivered to the UE 410 registered to a mobile communication network.

Operation S403: When there is no forwarding-related rule required for the specific UE 410 or when the UE 410 is not in an enabled state, the UPF 440-2 that receives a downlink packet from the DN may request a Downlink Data Notification (DDN) signal from an SMF 430.

Operation S405: The SMF 430 that receives the DDN signal may verify whether the corresponding packet is subject to using in-network computing capability through information received in the pre-negotiation stage. If the packet is not subject to using the in-network computing capability, the SMF 430 may enable the corresponding UE 410 and may perform a network-triggered service request procedure for the UE 410 to make the UE 410 prepare to receive data. This procedure may be the same as the procedure defined in 3GPP.

Operation S407: When the corresponding packet is a packet of the application configured to be able to use the in-network computing capability, the SMF 430 may issue a command to enable the corresponding function to the UPF 440-2. Here, to make it possible to process the corresponding application, enabling in-network computing indication may be delivered along with a traffic descriptor or an application ID capable of identifying the application. This in-network computing enable signal may be delivered to the UPF 440-2 along with a Downlink Notification ACK signal.

If a UPF directly connected to the DN is not a UPF with the in-network computing capability but a different UPF, the packet delivered to the anchor UPF may be processed to be delivered to an I-UPF through a procedure of inserting the I-UPF. The I-UPF that receives the packet may perform in-network computing-related processing and may deliver the result thereof to the UE.

Operation S409: The UPF 440-2 that receives DDN ACK from the SMF 430 may perform in-network computing-related processing for the packet. The packet may be actually delivered after operation S403.

Operation S411: The SMF 430 that receives the DNN signal in operation S403 may perform the network-triggered service request procedure to enable the corresponding target UE 410. This procedure may be identical to the procedure defined in 3GPP. In this process, if the packet transmitted from the UE 410 is an application utilizing the in-network computing function, a UE configuration update procedure of the UE 410 may be performed following the service request procedure. In this process, it is possible to convey whether the specific application is capable of using in-network computing by updating URSP of the UE 410 and the updated URSP may be utilized for a later PDU session establishment request procedure. The URSP is used to select a specific slice, to select an SSC mode, and to select a Data Network Name (DNN) when the UE uses the network to transmit specific traffic. The selected information may be delivered to the network as factors in a PDU session establishment procedure. The disclosure expands URSP rules and additionally includes a method of providing information that in-network computing capability is provided to the application negotiated in a previous operation. Tables 1 and 2 are part of TS23.503 specified by the 3GPP and include a method for URSP rules. In Table 2, in addition to some rules of URSP defined in the existing 3GPP, information or an indicator (in-network computing support indicator) regarding whether in-network computing is available with respect to specific traffic or application may be included. When the in-network computing indicator is configured, the UE 410 may determine information that the specific traffic (or application) may support in-network computing by way of the network and may utilize this to determine whether to use this function.

Operation S413: The UPF 440-2 delivers the downlink packet to the UE.

### [Fourth embodiment] - A method of configuring a route for supporting in-network computing of a specific application

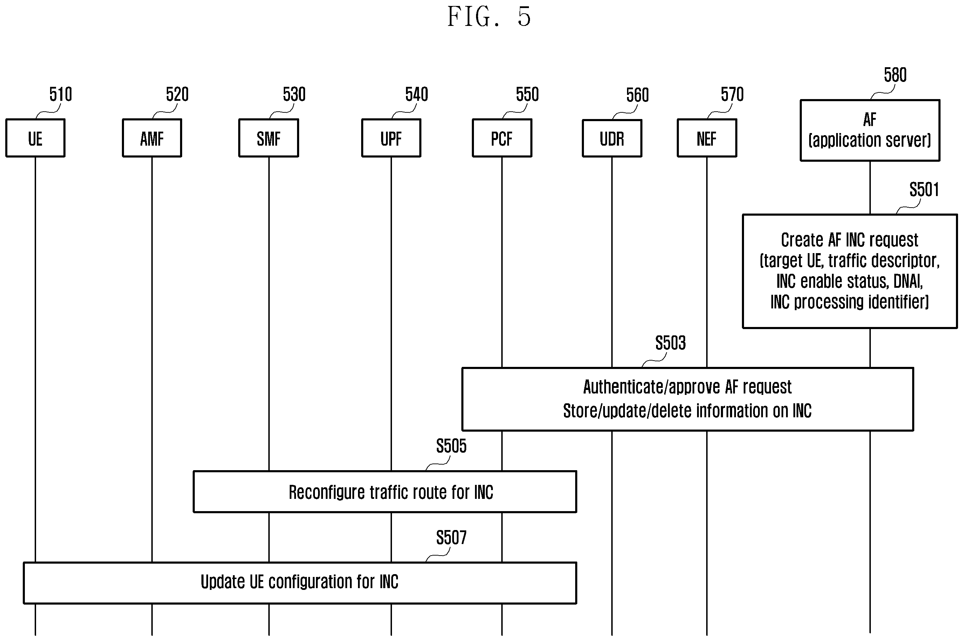

To improve services of a specific application being used by a UE, in-network computing-related configuration may be optionally performed. Hereinafter, a method of configuring a specific UE to utilize in-network computing when using services is described in detail with reference to FIG. 5

In-network computing refers to a function that is performed with finite resources and may not be processed beyond its processing capability. Therefore, a function of optionally selecting and processing a UE 510 using in-network computing, or enabling/disabling in-network computing may be required. In the existing 3GPP, an Application Function influence on traffic routing procedure is defined for the purpose of directing traffic originating from the UE 510 to be delivered through a specific route. This procedure is used by an AF 580 that performs application-related control in order to direct application traffic used by the specific UE to specific DNAI, and this process may be accompanied by change of a UPF 540. The disclosure includes a method of directing a packet for application using in-network computing to the specific UPF 540 or DN (DNAI) through a similar procedure.

The detailed design and operation method of in-network computing-related processing functions that may be handled by the specific UPF 540 in the disclosure is outside the scope of the disclosure, and, in the disclosure, it is assumed that processing-related operations processible through in-network computing are already installed and ready to be performed in the UPF 540. This processing logic may be designed, manufactured, and distributed to the UPF 540 through additional negotiation between an application service provider and a mobile communication service provider. Here, the mobile communication service provider that needs to perform a variety of in-network computing processing may create or generate an in-network computing processing identifier that is an identifier for distinguishing corresponding processing logics.

Operation S501: The AF 580 that is responsible for control related to a specific application creates a request for enabling use of in-network computing capability with respect to the UE 510 that uses the application. The created request may include a target UE, a traffic descriptor or an application ID capable of identifying application traffic, a destination DNAI, an in-network computing enable status, and an In-network computing processing identifier. Here, a message of the request used may be identical or similar to Application Function influence on traffic routing.

Operation S503: The request created in operation S501 is delivered to a PCF 550 through an NEF 570. A procedure used here may be the same as the Application Function influence on traffic routing. Through this procedure, policies related to the specific UE 510 may be stored in a UDR 560/UDM. If the UE is currently enabled, that information is updated may be delivered to NFs that use the policies related to the UE 510, such as an AMF 520 and the SMF 530, to inform them that the information is updated.

Operation S505: In operation S503, the SMF 530 may be informed that the request for in-network computing related to the specific UE 510 is updated. Upon request, the SMF 530 may determine whether a route of a PDU session for delivering data of the specific UE needs to be changed. If the route needs to be changed, the SMF 530 selects the UPF 540 that may handle the requested in-network computing and includes the same in the route. Here, if the selected UPF 540 is not an anchor UPF, the I-UPF may be additionally inserted.

Operation S507: When the request newly updated in operation S503 differs from URSP configuration possessed by the UE 510, the SMF 530 may update the policy of the UE 510 through UE configuration update. A method of updating and utilizing the URSP may be implemented according to other embodiments of the disclosure.

### [Fifth embodiment] - A general mobile communication network procedure for supporting in-network computing

Methods of the disclosure are prepared for 5G mobile communication networks defined in the 3GPP, but may be applied to 6G or general wireless mobile communication networks that will appear in the future. The following includes a method of supporting in-network computing through interoperation of network functions that play the following roles in the structure of the mobile communication network.
1) AM: Control plane function. UE's mobility and access management. (mobility & access management in the control plane)
2) SM: Control plane function. UE's user plane-related session and traffic delivery control (data session or network traffic management in the control plane)
3) FM: User plane function. Processing and delivery of actual packet (data forwarding and processing in the user plane)
4) PM: Control plane function. Political management required for UE and network management (policy management in the control plane)
5) UE: User equipment (user equipment such as smart phone, computer, or new devices)

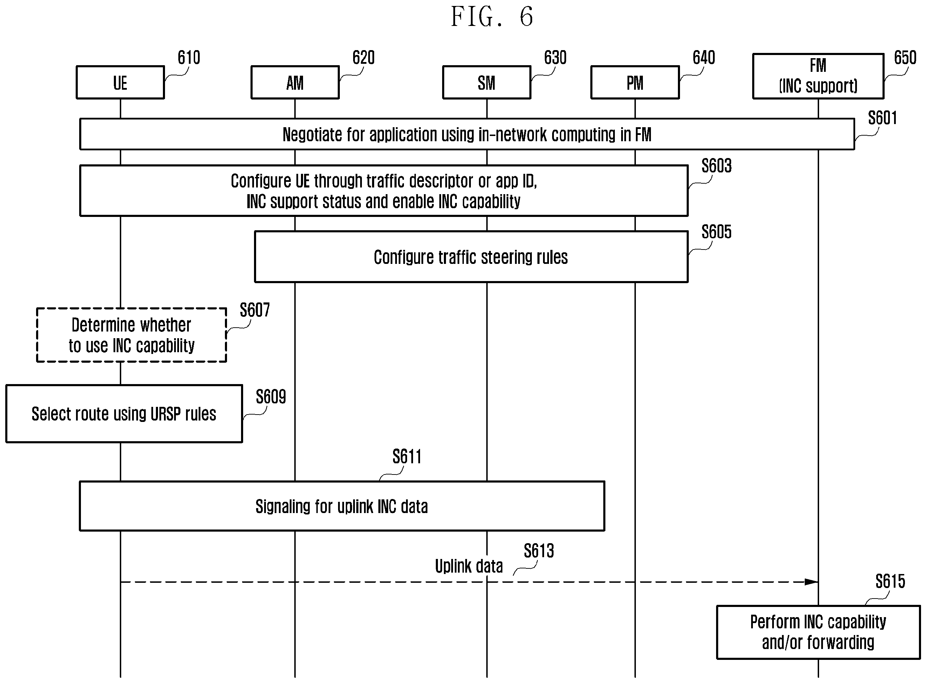

Hereinafter, a method for providing in-network computing in a mobile communication network with a generalized structure as described above is described in detail with reference to FIG. 6.

Operation S601: As preprocessing for implementing the disclosure, an FM 650 capable of performing in-network computing capability is installed. A type or traffic of application using the same may be negotiated between a network service provider and a user. Content related to this negotiation and configuration for processing in-network computing as above may be generated at any point in time before a subsequent operation. Here, a policy related to the application related to this negotiation may be managed by a PM 640 and may be read when a specific UE or the user uses a network.

Operation S603: The UE 610 may request a network service for registration to use the network or for packet delivery. During this process, policies related to the UE 610 may be modified. This procedure may be performed with an access and registration procedure for the UE 610 to use the network, and may be performed in response to a request from the network at an arbitrary point in time. In this process, network-related policies to be configured to the UE 610 may be delivered. In this process, a method of providing information that in-network computing capability is provided to a negotiated application may be included. Information or an indicator (in-network computing support indicator) regarding whether in-network computing is available with respect to specific traffic or application and traffic identifiers capable of distinguishing the corresponding traffic from other traffic may be delivered together.

Operation S605: The network that receives the service request from the UE 610 may configure a user plane route for delivering traffic of the UE. Here, when an in-network computing-related processing request is included in the request from the UE 610, an SM 630 that configures a route of the FM 650 may select the FM 650 capable of performing the same in operation S607 and may include the same in the route. In addition to this operation, the SM 630 may enable the in-network computing-related capability installed in the FM 650.

Operations S609, S611: When traffic that needs to be delivered through the network originates from the UE 610, the UE 610 may select a route through which the traffic is to be delivered, utilizing the in-network computing-related rules delivered in the previous operation. Taking 5G network as an example, it is a similar operation to an operation of selecting a PDU session connected to a specific DNN. Here, if the currently connected session does not support the in-network computing capability, the UE 610 may make a new request to the network.

Operation S613: The UE 610 may deliver uplink data to the destination FM 650.

Operation S615: The FM 650 that receives the packet from the UE 610 may perform in-network computing-related processing, may return the processing result to the UE 610, or may forward the packet received from the UE 610 or processed data to the DN for additional processing.

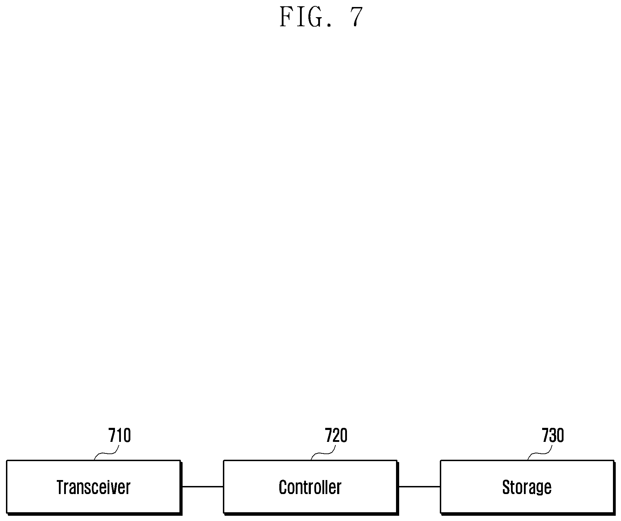

FIG. 7 is a diagram illustrating a structure of a UE according to an embodiment of the present invention.

With reference to FIG. 7, the UE may include a transceiver 710, a controller 720, and storage 730. In the present invention, the controller 720 may be defined as a circuit, an application-specific integrated circuit, or at least one processor.

The transceiver 710 may transmit and receive signals with another network entity. For example, the transceiver 710 may receive system information from a base station and may receive a synchronization signal or a reference signal therefrom.

The controller 720 may control the overall operation of the UE according to an embodiment proposed in the present invention. For example, the controller 720 may control signal flow between the respective blocks to perform an operation according to the flowcharts described above. In detail, the controller 710 may control the UE to configure a URSP, to determine a route for generated traffic utilizing configured URSP rules, and to request an SMF for PDU session establishment within a system according to an embodiment of the present invention.

The storage 730 may store at least one of information transmitted and received through the transceiver 710 and information generated through the controller 720. For example, the storage 730 may store information on URSP rules, including information or an indicator regarding whether In-network computing is available, and information on a slice, an SSC mode, and a DNN selected to establish a PDU session.

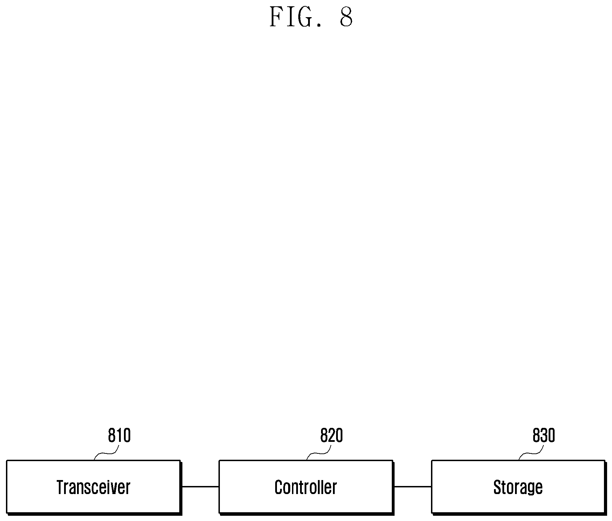

FIG. 8 is a diagram illustrating a structure of a network entity according to an embodiment of the present invention. For example, the network entity may be configured as an AMF, an SMF, a UPF, an AF, an NEF, a UDM, a UDR, a PCF, and a DN.

With reference to FIG. 8, the network entity may include a transceiver 810, a controller 820, and a storage 830. In the present invention, the controller 820 may be defined as a circuit, an application-specific integrated circuit, or at least one processor.

The transceiver 810 may transmit and receive signals with another network entity. For example, the transceiver 810 may transmit system information to a UE and may transmit a synchronization signal or a reference signal thereto.

The controller 820 may control the overall operation of the network entity according to an embodiment proposed in the present invention. For example, the controller 820 may control signal flow between the respective blocks to perform an operation according to the flowcharts described above. Describing by using the SMF as an example of the network entity, the controller 820 may receive a request from the UE in an uplink situation and may proceed with a PDU session establishment procedure, and, in this process, may select a UPF that supports in-network computing capability. Also, the controller 820 may receive a DNN signal from a DN in a downlink situation through the transceiver 810 and may determine whether the corresponding packet is an application packet configured to be able to use the in-network computing capability, and may issue a command to enable the corresponding function to the UPF through the transceiver 810. Also, the controller 820 may utilize functions of adding, deleting, and modifying a header of the packet, functions of adding, modifying, and deleting a payload present within the packet header, an AI/ML inference function, a Map/Reduce function of in-packet data, and an aggregation function of packet data.

The storage 830 may store at least one of information transmitted and received through the transceiver 810 and information generated through the controller 820. For example, the storage 830 may store basic data to perform functions related to addition, modification, and deletion of the packet or the payload, the AI/ML inference function, the Map/Reduce function of in-packet data, and the aggregation function of packet data described above.

The embodiments disclosed in the present specification and drawings above are only provided as specific examples to easily describe the content of the present invention and help understanding, and are not construed as limiting the scope of the present invention. Also, one or more of various embodiments described above may be combined and performed. Therefore, the scope of the present invention should be interpreted to include all changes or modified forms derived based on the disclosure in addition to the embodiments disclosed herein.

## Claims

1. A method of a user equipment, UE, (210; 310) in a wireless communication system, the method comprising:
transmitting (S209; S309), to a second network entity (230; 330), a Packet Data Unit, PDU, session establishment request that includes information regarding whether to use in-network computing, INC, capability, a workload identifier indicating a required operation, and traffic identification information;
receiving (S215; S315) a PDU session establishment result from the second network entity; and
transmitting (S217; S317) uplink data to a third network entity (240-2) that supports the INC capability and performs at least one of adding, modifying or deleting a payload of the uplink data based on the workload identifier, selected by the second network entity (230), based on the PDU session establishment result.

2. The method of claim 1, further comprising:
receiving (S203; S303) a UE Route Selection Policy, URSP, from a first network entity, wherein the URSP includes information regarding whether INC is available with respect to specific traffic or application; and
determining (S205, S207; S305, S307) whether to use the INC capability for the specific traffic based on the URSP.

3. The method of claim 2, further comprising:
receiving (S411), from the second network entity, a request for a UE configuration update procedure for the INC capability;
performing update of the URSP based on the request for the UE configuration update procedure; and
receiving (S413) downlink data from the third network entity that supports the INC capability.

4. A method of a second network entity (230; 330) in a wireless communication system, the method comprising:
receiving (S209), from a user equipment, UE, (210; 310) a Packet Data Unit, PDU, session establishment request that includes information regarding whether to use in-network computing, INC, capability, a workload identifier indicating a required operation, and traffic identification information;
selecting (S211; S311) a third network entity (240-2; 340-2) that supports the INC capability and performs at least one of adding, modifying or deleting a payload of uplink data based on the workload identifier and performing a PDU session establishment procedure based on the PDU session establishment request;
establishing (S213; S313) an N4 session with the selected third network entity; and
transmitting (S215; S315) a PDU session establishment result for the PDU session establishment request to the UE.

5. The method of claim 4, wherein the information regarding whether to use the INC capability indicates the use of the INC capability.

6. The method of claim 4, further comprising:
receiving (S403) Downlink Data Notification, DDN, from the third network entity;
determining (S405) whether a downlink packet corresponding to the DDN is subject to the use of the INC capability;
when the downlink packet is a packet configured to use the INC capability, transmitting (S407) a command to enable the INC capability to the third network entity;
transmitting (S407) a DDN Acknowledgement, ACK, signal for the DDN to the third network entity; and
transmitting (S411) a request for a UE configuration update procedure to the UE based on the DDN.

7. A method of a third network entity (240-2; 340-2) in a wireless communication system, the method comprising:
registering, to a fifth network entity, a Network Function, NF, profile including an INC capability support status;
establishing (S213; S313) an N4 session with a second network entity that verifies whether INC capability is supported through the NF profile;
receiving (S217; S317) uplink data from a user equipment, UE; and
performing at least one of adding, modifying or deleting a payload of the uplink data, based on a workload identifier received during an N4 session establishment procedure.

8. The method of claim 7, further comprising:
receiving (S401) downlink data from a fourth network entity;
transmitting (S403) Downlink Data Notification, DDN, corresponding to the downlink data to the second network entity;
receiving (S407), from the second network entity, a command to enable the INC capability and a DDN Acknowledgement, ACK, signal corresponding to the DDN;
performing (S409) INC processing for the downlink data; and
transmitting (S413), to the UE, the downlink data for which INC processing is performed.

9. A user equipment, UE, (210; 310) in a wireless communication system, the UE comprising:
a transceiver (710); and
a controller (720) configured to transmit, to a second network entity, a Packet Data Unit, PDU, session establishment request that includes information regarding whether to use in-network computing, INC, capability, a workload identifier indicating a required operation, and traffic identification information, to receive a PDU session establishment result from the second network entity, and to transmit uplink data to a third network entity that supports the INC capability and performs at least one of adding, modifying or deleting a payload of the uplink data based on the workload identifier, selected by the second network entity, based on the PDU session establishment result.

10. The UE of claim 9, wherein the controller is further configured to receive a UE Route Selection Policy, URSP, from a first network entity, and to determine whether to use the INC capability for specific traffic based on the URSP, the URSP including information regarding whether INC is available with respect to specific traffic or application.

11. The UE of claim 10, wherein the controller is additionally configured to receive, from the second network entity, a request for a UE configuration update procedure for the INC capability, to perform an update of the URSP based on the request for the UE configuration update procedure, and to receive downlink data from the third network entity that supports the INC capability.

12. A second network (230; 330) entity in a wireless communication system, the second network entity comprising:
a transceiver (810); and
a controller (820) configured to receive, from a user equipment, UE, (210; 310) a Packet Data Unit, PDU, session establishment request that includes information regarding whether to use in-network computing, INC, capability, a workload identifier indicating a required operation, and traffic identification information, to select a third network entity that supports the INC capability and performs at least one of adding, modifying or deleting a payload of uplink data based on the workload identifier and perform a PDU session establishment procedure based on the PDU session establishment request, to establish an N4 session with the selected third network entity, and to transmit a PDU session establishment result for the PDU session establishment request to the UE.

13. The second network entity of claim 12, wherein the controller is additionally configured to receive Downlink Data Notification, DDN, from the third network entity, to determine whether a downlink packet corresponding to the DDN is subject to the use of the INC capability, to transmit a command to enable the INC capability to the third network entity, to transmit a DDN Acknowledgement when the downlink packet is a packet configured to use the INC capability, ACK, signal for the DDN to the third network entity, and to transmit a request for a UE configuration update procedure to the UE based on the DDN.

14. A third network entity (240-2; 340-2) in a wireless communication system, the third network entity comprising:
a transceiver (810); and
a controller (820) configured to register, to a fifth network entity, a Network Function, NF, profile that includes an INC capability support status, to establish an N4 session with a second network entity that verifies whether INC capability is supported through the NF profile, to receive uplink data from a user equipment, UE, and to perform at least one of adding, modifying or deleting a payload of the uplink data, based on a workload identifier received during an N4 session establishment procedure.

15. The third network entity of claim 14, wherein the controller is additionally configured to receive downlink data from a fourth network entity, to transmit Downlink Data Notification, DDN, corresponding to the downlink data to the second network entity, to receive, from the second network entity, a command to enable the INC capability and a DDN Acknowledgement, ACK, signal corresponding to the DDN, to perform INC processing for the downlink data, and to transmit, to the UE, the downlink data for which INC processing is performed.

## Patentansprüche

1. Verfahren eines Benutzergeräts, UE, (210; 310) in einem drahtlosen Kommunikationssystem, wobei das Verfahren Folgendes umfasst:
Übertragen (S209; S309) einer Paketdateneinheits(PDU)-Sitzungsaufbauanforderung, die Informationen darüber, ob eine In-Network-Computing(INC)-Fähigkeit verwendet werden soll, eine Workload-Kennung, die einen erforderlichen Vorgang angibt, und Informationen zur Verkehrsidentifizierung enthält, an eine zweite Netzwerkeinheit (230; 330);
Empfangen (S215; S315) eines PDU-Sitzungsaufbauergebnisses von der zweiten Netzwerkeinheit; und
Übertragen (S217; S317) von Uplink-Daten an eine dritte Netzwerkeinheit (240-2), die die INC-Fähigkeit unterstützt und das Hinzufügen, Modifizieren und/oder Löschen einer Nutzlast der Uplink-Daten basierend auf der von der zweiten Netzwerkeinheit (230) ausgewählten Workload-Kennung ausführt, basierend auf dem PDU-Sitzungsaufbauergebnis.

2. Verfahren nach Anspruch 1, das ferner Folgendes umfasst:
Empfangen (S203; S303) einer UE-Routenauswahlrichtlinie, URSP, von einer ersten Netzwerkeinheit, wobei die URSP Informationen darüber enthält, ob das INC in Bezug auf einen spezifischen Datenverkehr oder eine spezifische Anwendung verfügbar ist; und
Bestimmen (S205, S207; S305, S307), ob die INC-Fähigkeit für den spezifischen Datenverkehr basierend auf der URSP verwendet werden soll.

3. Verfahren nach Anspruch 2, das ferner Folgendes umfasst:
Empfangen (S411) einer Anforderung für ein UE-Konfigurationsaktualisierungsverfahren für die INC-Fähigkeit von der zweiten Netzwerkeinheit;
Ausführen einer Aktualisierung der URSP basierend auf der Anforderung für das UE-Konfigurationsaktualisierungsverfahren; und
Empfangen (S413) von Downlink-Daten von der dritten Netzwerkeinheit, die die INC-Fähigkeit unterstützt.

4. Verfahren einer zweiten Netzwerkeinheit (230; 330) in einem drahtlosen Kommunikationssystem, wobei das Verfahren Folgendes umfasst:
Empfangen (S209) einer Paketdateneinheits(PDU)-Sitzungsaufbauanforderung, die Informationen darüber, ob eine In-Network-Computing(INC)-Fähigkeit verwendet werden soll, eine Workload-Kennung, die einen erforderlichen Vorgang angibt, und Informationen zur Verkehrsidentifizierung enthält, von einem Benutzergerät, UE, (210; 310);
Auswählen (S211; S311) einer dritten Netzwerkeinheit (240-2; 340-2), die die INC-Fähigkeit unterstützt und das Hinzufügen, Modifizieren und/oder Löschen einer Nutzlast von Uplink-Daten basierend auf der Workload-Kennung ausführt, und Ausführen eines PDU-Sitzungsaufbauverfahrens basierend auf der PDU-Sitzungsaufbauanforderung;
Aufbauen (S213; S313) einer N4-Sitzung mit der ausgewählten dritten Netzwerkeinheit; und
Übertragen (S215; S315) eines PDU-Sitzungsaufbauergebnisses für die PDU-Sitzungsaufbauanforderung an das UE.

5. Verfahren nach Anspruch 4, wobei die Informationen darüber, ob die INC-Fähigkeit verwendet werden soll, die Verwendung der INC-Fähigkeit angeben.

6. Verfahren nach Anspruch 4, das ferner Folgendes umfasst:
Empfangen (S403) einer Downlink-Datenbenachrichtigung, DDN, von der dritten Netzwerkeinheit;
Bestimmen (S405), ob ein Downlink-Paket, das der DDN entspricht, der Verwendung der INC-Fähigkeit unterliegt;
wenn das Downlink-Paket ein Paket ist, das zur Verwendung der INC-Fähigkeit konfiguriert ist, Übertragen (S407) eines Befehls zur Aktivierung der INC-Fähigkeit an die dritte Netzwerkeinheit;
Übertragen (S407) eines DDN-Bestätigungs(ACK)-Signals für die DDN an die dritte Netzwerkeinheit; und
Übertragen (S411) einer Anforderung für ein UE-Konfigurationsaktualisierungsverfahren basierend auf der DDN an das UE.

7. Verfahren einer dritten Netzwerkeinheit (240-2; 340-2) in einem drahtlosen Kommunikationssystem, wobei das Verfahren Folgendes umfasst:
Registrieren eines Netzwerkfunktions(NF)-Profils, das einen INC-Fähigkeitsunterstützungsstatus enthält, bei einer fünften Netzwerkeinheit;
Aufbauen (S213; S313) einer N4-Sitzung mit einer zweiten Netzwerkeinheit, die überprüft, ob die INC-Fähigkeit durch das NF-Profil unterstützt wird;
Empfangen (S217; S317) von Uplink-Daten von einem Benutzergerät, UE; und
Ausführen des Hinzufügens, Modifizierens und/oder Löschens einer Nutzlast der Uplink-Daten basierend auf einer während eines N4-Sitzungsaufbauverfahrens erhaltenen Workload-Kennung.

8. Verfahren nach Anspruch 7, das ferner Folgendes umfasst:
Empfangen (S401) von Downlink-Daten von einer vierten Netzwerkeinheit;
Übertragen (S403) einer Downlink-Datenbenachrichtigung, DDN, die den Downlink-Daten entspricht, an die zweite Netzwerkeinheit;
Empfangen (S407) eines Befehls zur Aktivierung der INC-Fähigkeit und eines DDN-Bestätigungs(ACK)-Signals, das der DDN entspricht, von der zweiten Netzwerkeinheit;
Ausführen (S409) einer INC-Verarbeitung für die Downlink-Daten; und
Übertragen (S413) der Downlink-Daten, für die die INC-Verarbeitung ausgeführt wird, an das UE.

9. Benutzergerät, UE, (210; 310) in einem drahtlosen Kommunikationssystem, wobei das UE Folgendes umfasst:
einen Transceiver (710); und
eine Steuerungseinheit (720), die so konfiguriert ist, dass sie an eine zweite Netzwerkeinheit eine Paketdateneinheits(PDU)-Sitzungsaufbauanforderung überträgt, die Informationen darüber, ob eine In-Network-Computing(INC)-Fähigkeit verwendet werden soll, eine Workload-Kennung, die einen erforderlichen Vorgang angibt, und Informationen zur Verkehrsidentifizierung enthält, ein PDU-Sitzungsaufbauergebnis von der zweiten Netzwerkeinheit empfängt und Uplink-Daten an eine dritte Netzwerkeinheit überträgt, die die INC-Fähigkeit unterstützt und das Hinzufügen, Modifizieren und/oder Löschen einer Nutzlast der Uplink-Daten basierend auf der von der zweiten Netzwerkeinheit ausgewählten Workload-Kennung ausführt, basierend auf dem PDU-Sitzungsaufbauergebnis.

10. UE nach Anspruch 9, wobei die Steuerungseinheit ferner so konfiguriert ist, dass sie eine UE-Routenauswahlrichtlinie, URSP, von einer ersten Netzwerkeinheit empfängt und bestimmt, ob die INC-Fähigkeit für den spezifischen Datenverkehr basierend auf der URSP verwendet werden soll, wobei die URSP Informationen darüber enthält, ob das INC in Bezug auf den spezifischen Datenverkehr oder die spezifische Anwendung verfügbar ist.

11. UE nach Anspruch 10, wobei die Steuerungseinheit zusätzlich so konfiguriert ist, dass sie von der zweiten Netzwerkeinheit eine Anforderung für ein UE-Konfigurationsaktualisierungsverfahren für die INC-Fähigkeit empfängt, eine Aktualisierung der URSP basierend auf der Anforderung für das UE-Konfigurationsaktualisierungsverfahren ausführt und Downlink-Daten von der dritten Netzwerkeinheit empfängt, die die INC-Fähigkeit unterstützt.

12. Zweite Netzwerkeinheit (230; 330) in einem drahtlosen Kommunikationssystem, wobei die zweite Netzwerkeinheit Folgendes umfasst:
einen Transceiver (810); und
eine Steuerungseinheit (820), die so konfiguriert ist, dass sie von einem Benutzergerät, UE, (210; 310) eine Paketdateneinheits(PDU)-Sitzungsaufbauanforderung empfängt, die Informationen darüber, ob eine In-Network-Computing(INC)-Fähigkeit verwendet werden soll, eine Workload-Kennung, die einen erforderlichen Vorgang angibt, und Informationen zur Verkehrsidentifizierung enthält, eine dritte Netzwerkeinheit auswählt, die die INC-Fähigkeit unterstützt und das Hinzufügen, Modifizieren und/oder Löschen einer Nutzlast von Uplink-Daten basierend auf der Workload-Kennung ausführt und ein PDU-Sitzungsaufbauverfahren basierend auf der PDU-Sitzungsaufbauanforderung ausführt, eine N4-Sitzung mit der ausgewählten dritten Netzwerkeinheit aufbaut und ein PDU-Sitzungsaufbauergebnis für die PDU-Sitzungsaufbauanforderung an das UE überträgt.

13. Zweite Netzwerkeinheit nach Anspruch 12, wobei die Steuerungseinheit zusätzlich so konfiguriert ist, dass sie eine Downlink-Datenbenachrichtigung, DDN, von der dritten Netzwerkeinheit empfängt, bestimmt, ob ein Downlink-Paket, das der DDN entspricht, der Verwendung der INC-Fähigkeit unterliegt, einen Befehl zur Aktivierung der INC-Fähigkeit an die dritte Netzwerkeinheit überträgt, ein DDN-Bestätigungs(ACK)-Signal für die DDN an die dritte Netzwerkeinheit überträgt, wenn das Downlink-Paket ein Paket ist, das zur Verwendung der INC-Fähigkeit konfiguriert ist, und eine Anforderung für ein UE-Konfigurationsaktualisierungsverfahren basierend auf der DDN an das UE überträgt.

14. Dritte Netzwerkeinheit (240-2; 340-2) in einem drahtlosen Kommunikationssystem, wobei die dritte Netzwerkeinheit Folgendes umfasst:
einen Transceiver (810); und
eine Steuerungseinheit (820), die so konfiguriert ist, dass sie bei einer fünften Netzwerkeinheit ein Netzwerkfunktions(NF)-Profil registriert, das einen INC-Fähigkeitsunterstützungsstatus enthält, eine N4-Sitzung mit einer zweiten Netzwerkeinheit aufbaut, die überprüft, ob die INC-Fähigkeit durch das NF-Profil unterstützt wird, Uplink-Daten von einem Benutzergerät, UE, empfängt und das Hinzufügen, Modifizieren und/oder Löschen einer Nutzlast der Uplink-Daten basierend auf einer während eines N4-Sitzungsaufbauverfahrens empfangenen Workload-Kennung ausführt.

15. Dritte Netzwerkeinheit nach Anspruch 14, wobei die Steuerungseinheit zusätzlich so konfiguriert ist, dass sie Downlink-Daten von einer vierten Netzwerkeinheit empfängt, eine Downlink-Datenbenachrichtigung, DDN, die den Downlink-Daten entspricht, an die zweite Netzwerkeinheit überträgt, einen Befehl zur Aktivierung der INC-Fähigkteit und ein DDN-Bestätigungs(ACK)-Signal, das der DDN entspricht, von der zweiten Netzwerkeinheit empfängt, eine INC-Verarbeitung für die Downlink-Daten ausführt und die Downlink-Daten, für die die INC-Verarbeitung ausgeführt wird, an das UE überträgt.

## Revendications

1. Procédé d'un équipement utilisateur (UE) (210 ; 310) dans un système de communication sans fil, le procédé comprenant :
transmettre (S209 ; S309), à une deuxième entité de réseau (230 ; 330), une demande d'établissement de session d'unité de données par paquets (PDU) qui inclue des informations relatives à l'utilisation ou non d'une capacité de calcul en réseau (INC), un identifiant de charge de travail indiquant une opération requise, et des informations d'identification de trafic ;
recevoir (S215 ; S315) un résultat d'établissement de session PDU de la deuxième entité de réseau ; et
transmettre (S217 ; S317) des données de liaison montante à une troisième entité de réseau (240-2) qui prend en charge la capacité INC et effectue au moins l'un parmi l'ajout, la modification ou la suppression d'une charge utile des données de liaison montante en fonction de l'identifiant de charge de travail, sélectionné par la deuxième entité de réseau (230), selon le résultat d'établissement de session PDU.

2. Procédé selon la revendication 1, comprenant en outre :
recevoir (S203 ; S303) une politique de sélection de route d'UE (URSP) depuis une première entité de réseau, où l'URSP inclut des informations relatives à la disponibilité ou non d'INC à l'égard d'un trafic ou d'une application spécifique ; et
déterminer (S205, S207; S305, S307) s'il convient d'utiliser la capacité INC pour le trafic spécifique en fonction de l'URSP.

3. Procédé selon la revendication 2, comprenant en outre :
recevoir (S411), de la deuxième entité de réseau, une demande de procédure de mise à jour de la configuration de l'UE pour la capacité INC ;
effectuer la mise à jour de l'URSP en fonction de la demande de procédure de mise à jour de la configuration de l'UE ; et
recevoir (S413) des données de liaison descendante depuis la troisième entité de réseau qui prend en charge la capacité INC.

4. Procédé d'une deuxième entité de réseau (230 ; 330) dans un système de communication sans fil, le procédé comprenant :
recevoir (S209), d'un équipement utilisateur (UE) (210 ; 310), une demande d'établissement de session d'unité de données par paquets (PDU) qui inclue des informations relatives à l'utilisation ou non d'une capacité de calcul en réseau (INC), un identifiant de charge de travail indiquant une opération requise, et des informations d'identification de trafic ;
sélectionner (S211 ; S311) une troisième entité de réseau (240-2 ; 340-2) qui prend en charge la capacité INC et effectue au moins l'un parmi l'ajout, la modification ou la suppression d'une charge utile des données de liaison montante en fonction de l'identifiant de charge de travail et l'exécution d'une procédure d'établissement de session PDU en fonction de la demande d'établissement de session PDU ;
établir (S213 ; S313) une session N4 avec la troisième entité de réseau sélectionnée ; et
transmettre (S215 ; S315) un résultat d'établissement de session PDU pour la demande d'établissement de session PDU à l'UE.

5. Procédé selon la revendication 4, où les informations relatives à l'utilisation ou non de la capacité INC indiquent l'utilisation de la capacité INC.

6. Procédé selon la revendication 4, comprenant en outre :
recevoir (S403) une notification de données de liaison descendante (DDN) depuis la troisième entité de réseau ;
déterminer (S405) si un paquet de liaison descendante correspondant à la DDN est soumis à l'utilisation de la capacité INC ;
lorsque le paquet de liaison descendante est un paquet configuré pour utiliser la capacité INC, transmettre (S407) une commande pour activer la capacité INC à la troisième entité de réseau ;
transmettre (S407) un signal d'accusé de réception (ACK) de DDN pour la DDN à la troisième entité de réseau ; et
transmettre (S411) une demande de procédure de mise à jour de la configuration de l'UE à l'UE en fonction de la DDN.

7. Procédé d'une troisième entité de réseau (240-2 ; 340-2) dans un système de communication sans fil, le procédé comprenant :
enregistrer, auprès d'une cinquième entité de réseau, un profil de fonction de réseau (NF) incluant un état de prise en charge de la capacité INC ;
établir (S213 ; S313) une session N4 avec une deuxième entité de réseau qui vérifie si la capacité INC est prise en charge via le profil NF ;
recevoir (S217 ; S317) des données de liaison montante depuis un équipement utilisateur (UE) ; et
effectuer au moins l'un parmi l'ajout, la modification ou la suppression d'une charge utile des données de liaison montante, en fonction de l'identifiant de charge de travail reçu au cours d'une procédure d'établissement de session N4.

8. Procédé selon la revendication 7, comprenant en outre :
recevoir (S401) des données de liaison descendante depuis une quatrième entité de réseau ;
transmettre (S403) une notification de données de liaison descendante (DDN) correspondant aux données de liaison descendante à la deuxième entité de réseau ;
recevoir (S407), depuis la deuxième entité de réseau, une commande pour activer la capacité INC et un signal d'accusé de réception (ACK) de DDN correspondant à la DDN ;
effectuer (S409) un traitement INC pour les données de liaison descendante ; et
transmettre (S413), à l'UE, les données de liaison descendante pour lesquelles le traitement INC est effectué.

9. Équipement utilisateur (UE) (210 ; 310) dans un système de communication sans fil, l'UE comprenant :
un émetteur-récepteur (710) ; et
un contrôleur (720) configuré pour transmettre, à une deuxième entité de réseau, une demande d'établissement de session d'unité de données par paquets (PDU) qui inclue des informations relatives à l'utilisation ou non d'une capacité de calcul en réseau (INC), un identifiant de charge de travail indiquant une opération requise, et des informations d'identification de trafic, pour recevoir un résultat d'établissement de session PDU depuis la deuxième entité de réseau, et pour transmettre des données de liaison montante à une troisième entité de réseau qui prend en charge la capacité INC et effectue au moins l'un parmi l'ajout, la modification ou la suppression d'une charge utile des données de liaison montante en fonction de l'identifiant de charge de travail, sélectionné par la deuxième entité de réseau, selon le résultat d'établissement de session PDU.

10. UE selon la revendication 9, où le contrôleur est en outre configuré pour recevoir une politique de sélection de route d'UE (URSP) depuis une première entité de réseau, et pour déterminer s'il convient d'utiliser la capacité INC pour un trafic spécifique en fonction de l'URSP, l'URSP incluant des informations relatives à la disponibilité ou non d'INC à l'égard d'un trafic ou d'une application spécifique.

11. UE selon la revendication 10, où le contrôleur est en outre configuré pour recevoir, depuis la deuxième entité de réseau, une demande de procédure de mise à jour de la configuration de l'UE pour la capacité INC, pour effectuer une mise à jour de l'URSP en fonction de la demande de procédure de mise à jour de la configuration de l'UE, et pour recevoir des données de liaison descendante depuis la troisième entité de réseau qui prend en charge la capacité INC.

12. Deuxième entité de réseau (230 ; 330) dans un système de communication sans fil, la deuxième entité de réseau comprenant :
un émetteur-récepteur (810) ; et
un contrôleur (820) configuré pour recevoir, depuis un équipement utilisateur (UE) (210 ; 310) une demande d'établissement de session d'unité de données par paquets (PDU) qui inclue des informations relatives à l'utilisation ou non d'une capacité de calcul en réseau (INC), un identifiant de charge de travail indiquant une opération requise, et des informations d'identification de trafic, pour sélectionner une troisième entité de réseau qui prend en charge la capacité INC et effectue au moins l'un parmi l'ajout, la modification ou la suppression d'une charge utile de données de liaison montante en fonction de l'identifiant de charge de travail et l'exécution d'une procédure d'établissement de session PDU en fonction de la demande d'établissement de session PDU, pour établir une session N4 avec la troisième entité de réseau sélectionnée, et transmettre un résultat d'établissement de session PDU pour la demande d'établissement de session PDU à l'UE.

13. Deuxième entité de réseau selon la revendication 12, où le contrôleur est en outre configuré pour recevoir une notification des données de liaison descendante (DDN) depuis la troisième entité de réseau, pour déterminer si un paquet de liaison descendante correspondant à la DDN est soumis à l'utilisation de la capacité INC, pour transmettre une commande pour activer la capacité INC à la troisième entité de réseau, pour transmettre un accusé de réception de DDN lorsque le paquet de liaison descendante est un paquet configuré pour utiliser le signal de capacité INC (ACK) pour la DDN à la troisième entité de réseau, et pour transmettre une demande de procédure de mise à jour de la configuration de l'UE à l'UE en fonction de la DDN.

14. Troisième entité de réseau (240-2 ; 340-2) dans un système de communication sans fil, la troisième entité de réseau comprenant :
un émetteur-récepteur (810) ; et
un contrôleur (820) configuré pour enregistrer, auprès d'une cinquième entité de réseau, un profil de fonction de réseau (NF) qui inclut un état de prise en charge de la capacité INC, pour établir une session N4 avec une deuxième entité de réseau qui vérifie si la capacité INC est prise en charge via le profil NF, pour recevoir des données de liaison montante depuis un équipement utilisateur (UE) et pour effectuer au moins l'un parmi l'ajout, la modification ou la suppression d'une charge utile des données de liaison montante, en fonction d'un identifiant de charge de travail reçu au cours d'une procédure d'établissement de session N4.

15. Troisième entité de réseau selon la revendication 14, où le contrôleur est en outre configuré pour recevoir des données de liaison descendante depuis une quatrième entité de réseau, pour transmettre une notification de données de liaison descendante (DDN) correspondant aux données de liaison descendante à la deuxième entité de réseau, pour recevoir, depuis la deuxième entité de réseau, une commande pour activer la capacité INC et un signal d'accusé de réception (ACK) de DDN correspondant à la DDN, pour exécuter un traitement INC pour les données de liaison descendante, et transmettre, à l'UE, les données de liaison descendante pour lesquelles le traitement INC est effectué.
